# DEMANDE DE BREVET EUROPEEN

(11) **EP 1 414 263 A1**
(43) Date de publication de la demande: **28.04.2004**
(21) Numéro de dépôt: 03292586.9
(22) Date de dépôt: 17.10.2003
(51) Int. Cl.: H04Q 7/38

(54) **Procédé et dispositif de gestion de ressources dans un réseau de communications**

(30) Priorité: 21.10.2002 FR 0213055
(71) Demandeur: EVOLIUM S.A.S., 75008 Paris (FR)
(72) Inventeur: Lacroix, Didier, 78117 Chateaufort (FR); Duhamel, Francois, 95160 Montmorency (FR); Soulie, Antoine, 75014 Paris (FR)
(74) Mandataire: El Manouni, Josiane

(57) **Abrégé**

Un dispositif (D) est dédié à la gestion de changement de canal entre un contrôleur de réseau (BSCn) et au moins un équipement de réseau (MS-i) dans un réseau de communications. Ce dispositif comprend des moyens de gestion (M) qui sont capables, lorsqu'une liaison a été établie sur un premier canal (C1) entre le contrôleur de réseau (BSCn) et l'équipement de réseau (MS-i), en vue de transmettre et/ou recevoir des données, de requérir du contrôleur de réseau (BSCn), d'une part, qu'il adresse à l'équipement de réseau (MS-i), sur le premier canal (C1), un message lui ordonnant de poursuivre la liaison sur un second canal (C2), tout en maintenant le premier canal (C1) jusqu'à ce qu'il reçoive sur ce second canal (C2) des données et/ou des acquittement(s) de données provenant de l'équipement (MS-i), et d'autre part, qu'il libère les ressources associées au premier canal (C1) à réception des données et/ou des acquittement(s) de données sur le second canal (C2).

## Description

L'invention concerne le domaine des réseaux de communications, et notamment la gestion des changements de ressources (ou canaux logiques) supportant des connexions entre des équipements (ou entités) de réseau et un réseau de communications, soumises à un taux d'erreurs de transmission non nul.

Les réseaux de communications, et notamment les réseaux dits cellulaires, comportent généralement un réseau d'accès (radio) comprenant des noeuds ou contrôleurs de réseau (radio) tels que des RNCs (pour « Radio Network Controllers ») ou des BSCs (pour « Base Station Controllers »), chargés de gérer l'allocation des ressources ou canaux logiques (tels que les canaux de liaison radio ou les codes de canalisation) permettant aux équipements de réseau d'établir des connexions, également appelées canaux, avec leur réseau de rattachement. Ces connexions peuvent être utilisées pour supporter des transmissions de données du réseau vers l'équipement (on parle alors de transmission descendante ou « downlink ») ou de l'équipement vers le réseau (on parle alors de transmission montante ou « uplink »).

Or, comme le sait l'homme de l'art, la capacité et l'efficacité des réseaux de communications, notamment des réseaux dits cellulaires, peuvent être notablement augmentées lorsque les ressources attribuées aux équipements de réseau peuvent être changées de façon dynamique au cours de la connexion avec le réseau d'accès (radio) et ce avec un minimum d'interruption de trafic et une durée minimale de recouvrement d'utilisation des anciens et nouveaux canaux logiques (ou ressources).

Les contrôleurs (ou noeuds) des réseaux d'accès sont donc généralement agencés de manière à initier, chaque fois que cela s'avère nécessaire, une procédure de changement des ressources (ou canaux) alloué(e)s aux équipements de réseau qu'ils gèrent. Cette procédure comporte tout d'abord une demande d'attribution de ressources (par exemple pour un nouveau canal), puis l'interruption du trafic de données sur l'ancien canal et la transmission à l'équipement de réseau concerné, sur l'ancien canal, d'un message lui ordonnant de changer de canal. Le trafic de données vers l'équipement de réseau est ensuite transmis sur le nouveau canal et, lorsque l'équipement de réseau a accusé réception du message sur l'ancien canal, ce dernier est libéré et peut être réattribué. Dans certaines mises en oeuvre le réseau peut même ne redémarrer le trafic sur le nouveau canal qu'une fois que l'accusé de réception a bien été reçu sur l'ancien canal. Cependant, lorsque l'accuse de réception n'est pas reçu sur l'ancien canal, le contrôleur de réseau doit de nouveau transmettre le message à l'équipement de réseau, éventuellement plusieurs fois, mais cette fois sur l'ancien canal et le nouveau canal, étant donné qu'il n'a aucun moyen de savoir si l'équipement de réseau est encore connecté à l'ancien canal ou s'il s'est connecté au nouveau canal. En fait, la seule chose que sait le contrôleur de réseau c'est que l'équipement de réseau ne peut écouter qu'un seul canal à la fois, soit l'ancien canal, soit le nouveau canal.

Du fait de cette procédure, et du fait de sa possibilité inhérente d'échec due au, taux d'erreurs de transmission, la durée d'interruption du trafic peut être très supérieure à celle nécessaire à l'équipement de réseau pour changer de canal (ou ressources). La durée moyenne du recouvrement d'utilisation des anciennes et des nouvelles ressources ralentit la procédure générale de gestion de l'ensemble des ressources du réseau, les anciennes ressources ne pouvant être libérées qu'une fois la procédure terminée. Par conséquent, les capacités du réseau sont réduites et la charge de trafic, liée aux besoins des équipements de réseau, ne peut pas être répartie de façon optimale.

De plus, cette procédure ne tient compte ni des risques d'échec du changement de ressources, ni des éventuelles différences de délais et/ou de capacité introduites par les anciennes et nouvelles ressources en raison de leurs caractéristiques propres.

L'invention a donc pour but de remédier à tout ou partie des inconvénients précités.

Elle propose à cet effet un procédé de gestion des changements de ressources (ou canaux logiques) entre des équipements de réseau (tels que, par exemple, des téléphones mobiles, ou plus généralement tout type de terminal d'échange de données) et un réseau de communications.

Ce procédé se caractérise par le fait qu'il consiste, en cas d'établissement d'une liaison sur un premier (ou ancien) canal (ou ressources) entre le réseau et l'un au moins des équipements de réseau, à ordonner à cet équipement de réseau, via le premier canal, de poursuivre la liaison sur un second (ou nouveau) canal (ou ressources), tout en maintenant le premier canal jusqu'à réception sur ce second canal de données et/ou d'acquittement(s) de données provenant dudit équipement. Les ressources du premier canal sont alors libérées une fois que le premier canal n'est plus utilisé par la station mobile, c'est à dire une fois que le réseau reçoit de l'équipement de réseau des données et/ou des acquittements de données sur le second canal.

Si l'équipement est en cours de transmission de données « uplink » vers le réseau au moment où ce dernier lui demande de changer de canal, le réseau maintient le premier canal jusqu'à ce qu'il reçoive de l'équipement de réseau des données sur le second canal.

Si le réseau est en cours de transmission de données « downlink » vers l'équipement au moment où il lui demande de changer de canal, le réseau poursuit la transmission des données vers l'équipement de réseau sur les premier et second canaux (ou ressources), et interrompt le premier canal lorsqu'il reçoit de l'équipement de réseau des acquittements de données sur le second canal.

Si le réseau est à la fois en cours de transmission de données "downlink" et "uplink" au moment de la demande de changement de canal, la procédure est identique. Le réseau maintient le premier canal et poursuit la transmission des données "downlink" vers l'équipement de réseau sur les premier et second canaux (ou ressources), et interrompt le premier canal lorsqu'il reçoit de l'équipement de réseau des données ou acquittements de données sur le second canal.

Le trafic étant transmis sur les premier et second canaux, le réseau n'a plus à se préoccuper de l'instant auquel l'équipement de réseau va procéder au changement de canal, instant qui ne peut être connu avec une bonne précision.

Préférentiellement, on répète le message sur le premier canal un nombre choisi (éventuellement prédéfini) de fois selon un schéma temporel choisi, par exemple de type périodique. Dans une mise en oeuvre préférentielle, le nombre de répétitions est choisi en fonction d'un taux de réussite souhaité et/ou d'un taux d'erreurs mesuré dans le réseau sur le canal (ou les ressources) utilisé(es).

Egalement dans une mise en oeuvre préférentielle, la période de répétition sur le premier canal est choisie de façon à éviter une corrélation entre les taux d'erreurs associés à deux messages reçus consécutivement.

Par ailleurs, il est avantageux de déterminer un délai permettant au(x) message(s) de changement de canal (ou ressource) de parvenir à l'équipement de réseau avec une avance au moins égale au temps qu'il lui faut pour procéder au dit changement de canal, de manière à différer la transmission des données sur les premier et second canaux (ou ressources) d'une valeur qui est fonction de ce délai. Une telle détermination peut également prendre en compte les débits de données et/ou les vitesses de transmission de données des premier et second canaux (ou ressources).

La répétition du message le nombre choisi de fois peut se faire tant que l'on n'a pas reçu d'acquittement(s) de données en provenance de l'équipement de réseau sur le second canal. En variante, la répétition du message peut être accompagnée d'une observation du réseau sensiblement simultanée, de manière à détecter un éventuel changement de comportement de l'équipement de réseau destinataire du message. Dans ce dernier cas, la détection de changement de comportement de l'équipement de réseau peut consister en une réception de données en provenance de l'équipement de réseau sur le second canal, ou bien en une détection d'une variation d'un paramètre choisi parmi, notamment, un paramètre de changement de mode de fonctionnement, une fréquence, une position, ou une réception d'accusé de réception consécutive à une opération d'interrogation de type « polling ».

L'invention propose également un dispositif de gestion des changements de canaux (ou ressources) entre un noeud ou contrôleur de réseau (comme par exemple un RNC ou une BSC) et au moins un équipement de réseau au sein d'un réseau de communications.

Ce dispositif se caractérise par le fait qu'il comprend des moyens de gestion capables, lorsqu'une liaison a été établie sur un premier canal (ou ressources) entre le contrôleur de réseau et un équipement de réseau, de requérir de ce contrôleur de réseau, d'une part, qu'il adresse à l'équipement de réseau, sur le premier canal, un message lui ordonnant de poursuivre la liaison sur un second canal tout en maintenant le premier canal jusqu'à ce qu'il reçoive sur ce second canal des données et/ou des acquittement(s) de données provenant de l'équipement, et d'autre part, qu'il libère les ressources associées au premier canal à réception des données et/ou des acquittement(s) de données.

Selon une autre caractéristique de l'invention, lorsque des données sont en cours de transmission vers l'équipement de réseau, les moyens de gestion sont agencés pour requérir du contrôleur de réseau qu'il poursuive la transmission des données à cet équipement de réseau sur les premier et second canaux tant qu'il n'a pas reçu, sur le second canal de données et/ou d'acquittement(s) de données en provenance de l'équipement de réseau.

Le dispositif de gestion selon l'invention pourra comporter d'autres caractéristiques complémentaires qui pourront être prises séparément et/ou en combinaison, et en particulier :
- des moyens de gestion agencés de manière à répéter le message sur le premier canal (ou ressources) un nombre choisi (éventuellement prédéfini) de fois, selon un schéma temporel choisi, par exemple de type périodique. Dans ce cas, le nombre de répétitions peut être choisi (par exemple déterminé) en fonction d'un taux de réussite souhaité, et/ou d'un taux d'erreurs mesuré. Cette détermination s'effectue par exemple à l'aide d'un calcul de probabilité. Par ailleurs, l'espacement entre deux répétitions peut être choisi de façon à éviter une corrélation entre les taux d'erreurs associés à deux messages consécutifs,
- des moyens de gestion agencés de manière à déterminer un délai permettant aux messages de changement de canal (ou ressources) de parvenir à l'équipement de réseau avec une avance au moins égale au temps qui lui est nécessaire pour procéder au changement de canal (ou ressources), puis, dans le cas de données « downlink », à ordonner au noeud ou contrôleur de réseau de différer la transmission des données sur les premier et second canaux (ou ressources) d'une valeur fonction de ce délai. Un tel délai peut être également déterminé en fonction des débits de données et/ou des vitesses de transmission de données des premier et second canaux (ou ressources),
- des moyens de gestion agencés de manière à répéter le message le nombre choisi de fois tant qu'ils n'ont pas reçu d'acquittement(s) de données en provenance de l'équipement de réseau, sur le second canal,
- des moyens de gestion agencés de manière à répéter le message le nombre choisi de fois et à observer sensiblement simultanément le réseau, de manière à détecter un éventuel changement de comportement de l'équipement de réseau destinataire du message. Dans ce cas, la détection de changement de comportement de l'équipement de réseau peut consister en une réception de données en provenance de l'équipement de réseau sur le second canal, ou bien en une détection d'une variation d'un paramètre choisi parmi, notamment, un paramètre de changement de mode de fonctionnement, une fréquence, une position, ou une réception d'accusé de réception consécutive à une opération d'interrogation de type « polling ».

L'invention propose en outre un contrôleur (ou noeud) de réseau de communications équipé d'un dispositif de gestion du type de celui présenté ci-avant. D'une manière générale, le dispositif de gestion est préférentiellement destiné à être implanté dans la partie de chaque contrôleur de réseau, ou d'un autre équipement, chargée de contrôler les transferts de données en mode paquets. Dans le cas d'un réseau radio cellulaire de type GPRS, cette partie est celle qui supporte la fonction PCU (pour « Packet Control Unit »).

Le dispositif, le contrôleur de réseau, et le procédé selon l'invention sont adaptés à tout type de réseau de communications et en particulier aux réseaux cellulaires de communications, et notamment aux réseaux de type TDMA, CDMA, CDMA-One, PHS et FOMA.

D'autres caractéristiques et avantages de l'invention apparaîtront à l'examen de la description détaillée ci-après, et des dessins annexés, sur lesquels :
- la figure 1 illustre de façon schématique une partie d'un réseau de communications équipé de dispositifs de gestion selon l'invention, implantés dans des noeuds (ou contrôleurs) de réseau, et
- la figure 2 illustre de façon schématique les principales étapes du procédé de changement de canal (ou ressources) selon l'invention.

Les dessins annexés pourront non seulement servir à compléter l'invention, mais aussi contribuer à sa définition, le cas échéant.

L'invention porte sur un dispositif et un procédé de gestion des changements de canaux logiques (ou ressources) entre des équipements de réseau et un réseau. Ces dispositif et procédé sont donc respectivement destinés à être implantés et mis en oeuvre dans des réseaux de communications, et notamment dans des réseaux publics cellulaires de communications de type PLMN (pour « Public Land Mobile Network »), comme par exemple les réseaux dits « 2G » ou « 2,5G », tels que les réseaux GPRS, ou les réseaux dits « 3G », tels que le réseau UMTS. Mais, l'invention n'est pas limitée à ces réseaux, et s'applique d'une manière générale à tous les types de réseau de communications.

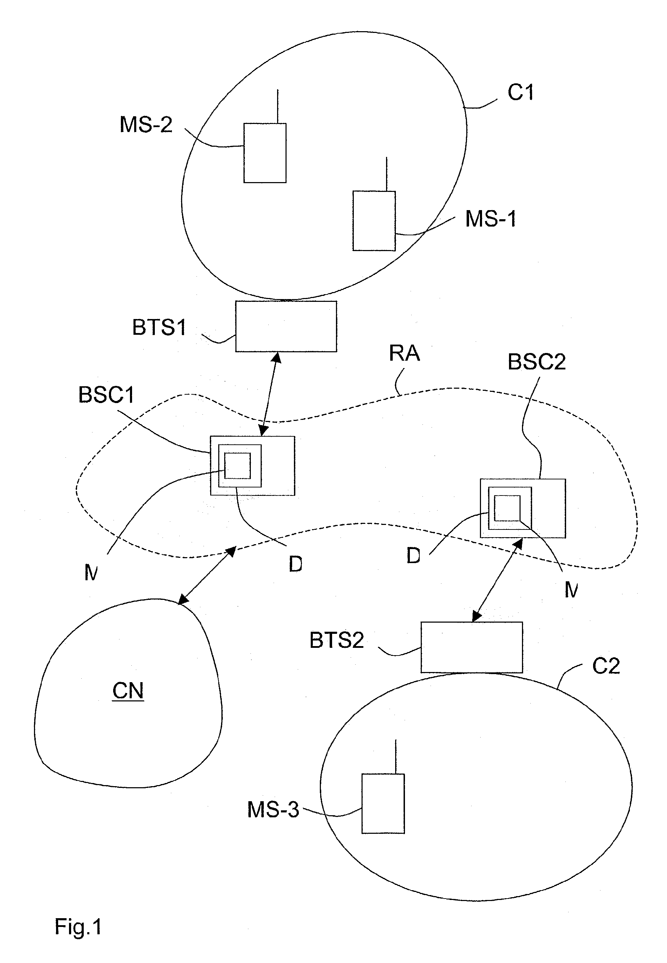

Comme illustré sur la figure 1, un réseau cellulaire peut, d'une façon très schématique mais néanmoins suffisante à la compréhension de l'invention, être résumé à un coeur de réseau (ou « Core Network » (CN)) couplé à un réseau d'accès radio (ou « Radio Access Network » (RAN)) comportant :
- plusieurs noeuds (ou contrôleurs de réseau radio) couplés au Core Network CN, via une interface. Ces noeuds sont appelés BSC (pour « Base Station Controller »), dans le cas des réseaux de type GPRS, et RNC (pour « Radio Network Controller »), dans le cas des réseaux de type UMTS ; et
- plusieurs stations de base d'émission/réception, d'une part, associées chacune à une ou plusieurs cellules couvrant chacune une zone radio, et d'autre part couplées seules ou par groupe à l'un des noeuds, via une interface. Ces stations de base sont appelées BTS dans le cas d'un réseau de type GPRS et Node B dans le cas d'un réseau UMTS.

Dans ce qui suit on considère à titre d'exemple non limitatif que le réseau est de type TDMA, et plus précisément de type GPRS. Par ailleurs, on considère que les équipements de réseau sont des stations mobiles MS-i (ici, i = 1 à 3), éventuellement capables d'échanger des données avec d'autres équipements du réseau selon, par exemple, le protocole WAP (pour « Wireless Application Protocol »), SMS (pour « Short Message Service »), EMS (pour « Extended Message Service »), MMS (pour « Multimedia Message Service »), ou TCP (pour « Transport Control Protocol »). On entend ici par « station mobile » des téléphones mobiles, des assistants numériques personnels (ou PDA pour « Personal Digital Assistant ») ou des ordinateurs portables équipés d'une interface radio, et plus généralement tout type de machine mobile ou itinérante équipée d'une interface radio et adaptée notamment aux applications de télésurveillance, ou de télé-maintenance, ou encore de contrôle de trafic routier ou ferroviaire. Mais, d'une manière générale, l'invention s'applique à tous les équipements de réseau pouvant échanger des données.

On considère également, à titre illustratif, que chaque station de base du RAN, ici une BTSj (ici, j = 1 ou 2) contrôle une unique cellule Cj définissant une zone géographique (assimilée ci-après à la cellule Cj correspondante). Bien entendu, les BTSs pourraient contrôler plusieurs cellules, et une zone géographique pourrait être définie par plusieurs cellules ou portions de cellules. Enfin, on considère que chaque BSCn (ici, n = 1 ou 2) contrôle une unique BTS.

Comme indiqué précédemment, le dispositif D selon l'invention est destiné à gérer les changements de canaux (ou ressources) établis entre des équipements de réseau et un réseau de communications, et plus précisément son réseau d'accès radio (RAN). Le dispositif de gestion D est donc destiné à être implanté dans un ou plusieurs équipements du RAN, et plus préférentiellement, comme illustré, dans chaque contrôleur de réseau (ici des BSCs). Dans ce cas, il est préférentiellement intégré dans la partie du contrôleur de réseau chargée de contrôler les transferts de données en mode paquets, c'est-à-dire dans le cas d'un réseau de type GPRS, dans la fonction PCU (pour « Packet Control Unit ») de chaque contrôleur du réseau. D'une manière générale, le dispositif selon l'invention est préférentiellement implanté dans le BSC si celui-ci supporte la fonction PCU, ou dans un autre équipement si celui-ci supporte la fonction PCU.

Le dispositif de gestion D comporte principalement un module de gestion M destiné à gérer les changements de canaux (premiers canaux vers seconds canaux) décidés par le RAN. Plus précisément, lorsque le RAN décide qu'un (ou plusieurs) équipement(s) de réseau, gérés par le BSCn dans lequel le dispositif de gestion D est implanté, doivent changer de canaux (ou ressources), le module de gestion M est chargé de requérir du BSCn qu'il adresse à chaque station mobile MS-i désignée, sur son premier canal (ou ancien canal) C1, un message requérant de sa part la poursuite de la liaison sur un second canal (ou nouveau canal) C2.

Le module de gestion M est également chargé, dans le cas de données "downlink", de requérir du BSCn qu'il poursuive la transmission des données vers chaque station mobile MS-i désignée sur les premier C1 et second C2 canaux, puis qu'il interrompe la transmission des données sur le premier canal C1 tout en la maintenant sur le second canal C2, et qu'il libère les ressources associées au premier canal C1 dès qu'il reçoit de la station mobile MS-i des données ou acquittements de données sur le second canal C2.

Préférentiellement, lorsque le module de gestion M est averti qu'un changement de canal (ou ressources) doit être effectué, il détermine tout d'abord le nombre de fois que le BSCn devra répéter le message de changement de canal sur le premier canal C1 et selon un schéma temporel choisi, pour atteindre un certain taux de succès souhaité, éventuellement adaptable. Le taux de succès souhaité du changement de canal peut dépendre de la criticité de la procédure, par exemple en termes de gestion des ressources, ou lorsque le canal initial doit être impérativement libéré.

Par exemple, le nombre de répétitions peut être déterminé en fonction d'un taux de réussite souhaité et/ou d'un taux d'erreurs mesuré. Cette détermination peut s'effectuer à l'aide d'un calcul de probabilités qui suppose, par exemple, que la probabilité d'erreur sur un message répété est indépendante de celle du message précédent.

Par exemple, dans le cas d'un schéma temporel de type périodique, cela suppose un espacement dans le temps entre deux répétitions (période) suffisamment long pour que, statistiquement, une erreur de transmission sur un premier message n'affecte pas également un second message. En d'autres termes, l'espacement doit être plus grand que la durée moyenne statistique d'un défaut de transmission. Cette donnée d'espacement peut être déductible de la connaissance des conditions locales du réseau, par exemple la connaissance des conditions de propagation radio ou d'autres perturbations assimilables à un défaut radio (dans le cas d'un réseau radio cellulaire). Mais, on peut choisir à priori cette valeur d'espacement.

Mais bien entendu, le nombre de répétitions peut être fixé à l'avance et demeurer constant pour un BSCn donné.

Egalement de préférence, lorsque le module de gestion M est averti qu'un changement de canal (ou ressources) doit être effectué, et éventuellement après avoir calculé le nombre de répétitions, il détermine un délai permettant au message de changement de canal de parvenir à la station mobile MS-i (sur le premier canal C1) avec une avance par rapport à l'activation du canal C2 au moins égale au temps TNR (pour « Time Not Reachable ») qu'il lui faut pour procéder audit changement de canal (ou ressource). Ainsi, on peut garantir, avec le taux de succès souhaité, présenté ci-avant, que le flux de données « downlink » parvienne au niveau de la station mobile MS-i sur le second canal C2 après que le message de changement de canal (ou ressources) soit parvenu à la station mobile MS-i sur le premier canal C1 et qu'une durée TNR se soit écoulée après réception de ce message.

Dans la mesure où les débits T1 et T2 et temps de propagation D1 et D2 des premier C1 et second C2 canaux peuvent différer, une marge temporelle supplémentaire peut être ajoutée, ou retranchée, au délai décrit ci-avant afin de minimiser le retard, au niveau de l'équipement, de la réception des données sur le second canal C2 par rapport à celle sur le premier canal C1, mais néanmoins garantir qu'aucune donnée n'est perdue.

Si le délai déterminé est positif, le module de gestion M requiert du BSCn qu'il adresse immédiatement à la station mobile MS-i désignée, sur le premier canal C1, le message de changement de canal (ou ressources). Puis, dans le cas de données « downlink », il lui ordonne de poursuivre, la transmission des données vers la station mobile MS-i désignée sur les premier C1 et second C2 canaux (ou ressources), de manière à satisfaire la condition temporelle précitée.

Si le délai déterminé est négatif, cela indique que l'on aurait déjà dû commencer à transmettre le flux de données en « downlink » sur le second canal C2. Cela n'étant pas possible, dans le cas de données « downlink », le module de gestion M requiert du BSCn qu'il commence par adresser les données sur le second canal C2, puis qu'il réduise d'une valeur déterminée le débit du premier canal C1 de manière à satisfaire la condition précitée. Le module de gestion M requiert alors du BSCn qu'il adresse le message de changement de canal (ou ressources) à la station mobile MS-i désignée, sur le premier canal C1, après un délai, s'il est positif, égal à D2 - D1 - TNR , de manière à assurer que le message de changement de canal (ou ressources) sera reçu par la station mobile MS-i avec une avance, par rapport à l'une quelconque des données transmises sur le second canal C2, au moins égale au temps TNR nécessaire à la station mobile MS-i pour procéder au changement de canal. On assure ainsi que la station mobile MS-i pourra reconfigurer son canal (ou ressources) avant qu'elle ne reçoive les données du trafic.

Dans l'un ou l'autre cas, comme indiqué précédemment, le module de gestion M ordonne au BSCn d'interrompre le premier canal C1 tout en maintenant le second canal, C2, dès qu'il reçoit de la station mobile MS-i des données ou des acquittements de données sur le second canal C2.

Les ressources du réseau utilisées par le premier canal C1, initialement allouées à la station mobile MS-i par le BSCn, sont alors de nouveau disponibles et peuvent être allouées à une autre station mobile MS.

Dans ce qui précède, il a été indiqué qu'on libérait les ressources allouées au premier canal C1 lorsque le BSC concerné recevait d'un équipement MS-i des données ou des acquittements de données sur le second canal C2.

Lorsqu'un BSC ne reçoit pas dans un délai prédéfini, sur le second canal C2, d'acquittement de données (ou d'accusé de réception de message), consécutivement à la transmission à un équipement MS-i d'un premier message, les ressources demeurent allouées au premier canal C1. Dans ce cas, une fois le délai prédéfini écoulé le module de gestion M (et donc le BSC) doit de nouveau transmettre le même message à l'équipement de réseau une ou plusieurs fois.

Or, comme évoqué dans la partie d'introduction, un message (ou une commande) transmis(e) à un équipement, ici une station mobile MS-i, peut ne pas lui parvenir. Par ailleurs, le taux d'erreurs du réseau étant non nul, un équipement MS-i peut transmettre un accusé de réception de message, mais celui-ci peut ne pas parvenir au BSC.

Le délai prédéfini, qui sépare l'émission d'un premier message de l'émission du message suivant, est d'autant plus long que le taux d'erreurs du réseau est important. Par conséquent, plus le taux d'erreurs du réseau est important, plus le mécanisme de gestion des accusés de réception est consommateur de temps et de ressources « uplink », ce qui peut nuire à la qualité de service offert aux usagers (ou clients) du réseau.

Pour remédier à cet inconvénient, l'invention propose donc de remplacer le mécanisme de gestion des accusés de réception par un mécanisme de détection de changement de comportement d'équipement MS-i. Ce mécanisme peut par exemple consister à détecter la transmission de données sur le canal C2, comme évoqué ci-avant.

Le module de gestion M du dispositif D peut être agencé à cet effet.

Dans ce cas, le module de gestion M est préférentiellement agencé de manière à déterminer combien de fois le BSC est autorisé à répéter l'envoi d'un message (ou commande) en fonction du taux d'erreurs moyen sur le canal que les messages doivent emprunter et compte tenu d'un taux de succès requis.

Le taux d'erreurs moyen peut être soit déterminé par le module de gestion M, par exemple à partir de mesures fournies par la BSC et effectuées par le réseau (telles que des relevés de taux d'erreur), soit fourni au module de gestion M par l'opérateur du réseau.

Par ailleurs, le taux de succès peut être soit fourni au module de gestion M par l'opérateur, soit estimé par le module de gestion M à partir d'un ou plusieurs paramètres de réseau choisis.

On entend ici par « paramètre » aussi bien un paramètre configurable fourni par l'opérateur qu'une mesure effectuée au sein du réseau. Par conséquent, un paramètre peut être, par exemple, un paramètre de changement de mode de fonctionnement (résultant de l'envoi de mesures radio sur des cellules adjacentes du réseau), ou une fréquence, ou une position (obtenue consécutivement à une demande de localisation), ou encore une réception d'accusé de réception consécutive à une opération d'interrogation de type « polling ».

Une fois le nombre de répétitions déterminé, le module de gestion M doit déterminer le délai d'attente entre deux messages répétés. Ce délai peut être constant ou variable.

Dans le cas d'un délai constant, c'est-à-dire en cas de répétition périodique, la période de répétition est par exemple choisie de façon à garantir que les erreurs ne sont pas (ou quasiment pas) corrélées. En d'autres termes, la période de répétition est choisie de manière à éviter une corrélation entre les taux d'erreurs associés à deux messages reçus consécutivement. Comme indiqué précédemment, cela suppose un espacement dans le temps entre deux répétitions suffisamment long pour que, statistiquement, une erreur de transmission sur un premier message n'affecte pas également un second message. Cet espacement peut être déductible de la connaissance des conditions locales du réseau, par exemple de la connaissance des conditions de propagation radio ou d'autres perturbations assimilables à un défaut radio (dans le cas d'un réseau radio cellulaire). Mais, l'espacement peut être également choisi à priori.

Une fois que toutes ces informations relatives à la répétition de message ont été déterminées, le module de gestion M peut alors transmettre un message (ou commande) à un équipement MS-i, puis le répéter N fois conformément aux informations reçues, sans attendre que l'équipement MS-i lui transmette un accusé de réception. Dans le même temps, le module de gestion M observe le réseau, afin de déterminer un éventuel changement de comportement de l'équipement MS-i.

En effet, si l'équipement MS-i a reçu l'un des messages et y a obéi son comportement a changé, tandis que si l'équipement MS-i n'a pas reçu les N messages son comportement demeure inchangé. On considère ici que l'équipement MS-i ignore les messages répétés qui lui parviennent et qui correspondent à la configuration qu'il a instaurée consécutivement à la réception d'un précédent message identique.

Un changement de comportement peut notamment être détecté par la réception sur le canal C2 de données provenant de l'équipement MS-i concerné. Mais, la détection peut également porter sur la variation de la valeur d'un paramètre du réseau relatif à la liaison avec l'équipement MS-i, comme indiqué précédemment.

Le module de gestion M interprète tout changement de comportement d'un équipement MS-i, consécutif à l'envoi d'une série de N messages répétés, comme un accusé de réception de ces messages. En revanche, en l'absence de changement de comportement d'un équipement MS-i, consécutivement à l'envoi d'une série de N messages répétés, le module de gestion M sait que l'équipement n'a pas reçu les messages. Selon sa configuration, le module de gestion peut alors soit faire une nouvelle tentative de transmission en adressant de nouveau N messages répétés à l'équipement MS-i, soit déclencher une action appropriée comme par exemple incrémenter d'une unité un compteur interne destiné à notifier à l'opérateur une série d'échecs.

Ce mode de fonctionnement est particulièrement avantageux car il permet d'éviter de consommer des ressources dans la direction « uplink » (de l'équipement vers le réseau) pour la transmission des accusés de réception.

En outre, cette procédure présente une plus grande efficacité que la procédure classique par réception d'accusé de réception, en terme de rapport entre le taux de succès et le temps mis par un équipement pour changer de comportement. Cela est particulièrement intéressant dans les réseaux sans fil dans lesquels le taux d'erreurs peut être élevé et le temps nécessaire au changement assez long.

Le module de gestion M du dispositif D selon l'invention peut être réalisé sous la forme de module(s) logiciel(s) ("software"). Mais il peut être également réalisé, au moins en partie, sous la forme de circuits électroniques ("hardware"), ou encore sous la forme de combinaisons de modules logiciels et de circuits électroniques.

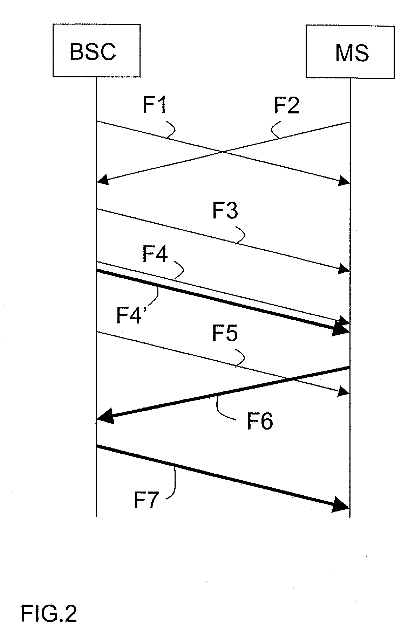

On se réfère maintenant à la figure 2 pour résumer les principales étapes d'un procédé de changement de canal (ou ressources) selon l'invention, pouvant être mis en oeuvre, par exemple à l'aide du dispositif de gestion D décrit ci-avant. Sur cette figure 2, les flèches minces représentent une liaison sur le premier canal C1, tandis que les flèches épaisses représentent une liaison sur le second canal C2.

On considère ici qu'une station mobile MS, présente dans une cellule Cj contrôlée par une station de base (BTSj) gérée par un BSC, a établi une liaison sur le premier canal C1 avec un réseau de communications, et plus précisément avec ledit BSC de ce réseau. Cette liaison sur le canal C1 leur permet d'échanger des données (ou trafic downlink et uplink).

Lorsqu'un changement de canal (ou ressources) est décidé par le réseau d'accès RAN, et que le dispositif D a adressé ses instructions au BSC, celui-ci transmet le message de changement de canal (ou ressources) à la station mobile MS sur le premier canal C1 (flèche F3). Puis, il transmet les données de trafic à la station mobile MS sur les premier C1 et second C2 canaux (flèches F4 et F4'). N'ayant pas encore reçu de données de la station mobile MS sur le second canal C2, le BSC répète le message de changement de canal (ou ressources) sur le premier canal C1 (flèche F5). Dans cet exemple, la station mobile MS a bien reçu le premier message de changement de canal (ou ressources) et s'est reconfigurée sur le second canal C2 peu de temps après que le BSC ait répété son (second) message. Par conséquent, la station mobile MS commence à transmettre des données ou des acquittements de données à destination du BSC, sur le second canal C2, avant que le second message ne lui parvienne (flèche F6).

ici, les données transmises par la station mobile MS parviennent au BSC avant qu'il n'ait répété une nouvelle fois le message. Par conséquent, à réception des données sur le second canal C2, le BSC interrompt la transmission des données de trafic sur le premier canal C1 et la maintient sur le second canal C2 (flèche F7), ce qui met fin à la procédure de changement de canal (ou ressources).

L'invention peut s'appliquer à tout type de changement de canal (ou ressources), indépendamment des capacités des canaux (ou ressources), des retards qu'ils (qu'elles) introduisent et des technologies sous-jacentes. L'invention peut ainsi s'appliquer aux changements de canaux (ou ressources) entre réseaux de communications supportant des technologies différentes, comme par exemple entre des réseaux 2G et 4G ou entre un réseau 3G et une liaison Bluetooth. Elle peut également s'appliquer à tout type de changement de canaux logiques, et notamment aux changements de ressources radio dans un réseau GSM/GPRS ainsi qu'aux changements de codes de canalisation (ou « channelization ») dans un réseau UMTS/UTRAN.

En outre, l'invention permet d'optimiser le changement de canal (ou ressources) de chaque équipement de réseau, en offrant, d'une part, un temps minimal, mais garanti, de recouvrement d'utilisation des premier et second canaux, d'une deuxième part, un taux de succès garanti du changement de canal (ou ressources), et d'une troisième part, une consommation minimale de bande passante.

De plus, l'invention permet de réduire, au moins de façon statistique, les durées des procédures de changement de canal (ou ressources) et les variations de ces durées.

Enfin, l'invention permet de limiter la consommation de ressources dans la direction « uplink ».

L'invention ne se limite pas aux modes de réalisation de dispositif, d'équipement de réseau, de station de base, de contrôleur de réseau et de procédé décrits ci-avant, seulement à titre d'exemple, mais elle englobe toutes les variantes que pourra envisager l'homme de l'art dans le cadre des revendications ci-après.

Ainsi, on a décrit un exemple de dispositif de gestion implanté dans un contrôleur de réseau pour gérer les changements de canaux qu'il décide. Mais, il pourrait être implanté dans un autre équipement, comme par exemple un routeur pour optimiser les changements de routes.

Par ailleurs, on a décrit une application de l'invention aux réseaux de communications de type cellulaire. Mais l'invention ne se limite pas à ce type de réseau. Elle s'applique en effet à tous les types de réseau de communications, dès lors que les connexions établies entre les équipements et le réseau sont soumises à un taux d'erreurs de transmission non nul.

## Revendications

1. Procédé de gestion de changement de canal entre un réseau de communications et au moins un équipement de réseau (MS-i), **caractérisé en ce qu'**après établissement d'une liaison sur un premier canal (C1 ) entre ledit réseau et ledit équipement de réseau (MS-i), en vue de transmettre et/ou recevoir des données, on adresse audit équipement de réseau (MS-i), sur ledit premier canal (C1), un message lui ordonnant de poursuivre ladite liaison sur un second canal (C2), tout en maintenant ledit premier canal (C1) jusqu'à réception sur ledit second canal (C2) de données et/ou d'acquittement(s) de données provenant dudit équipement (MS-i), les ressources associées audit premier canal (C1 ) étant alors libérées.

2. Procédé selon la revendication 1, **caractérisé en ce que**, dans le cas de données transmises à l'équipement (MS-i), on poursuit la transmission des données audit équipement de réseau (MS-i) sur lesdits premier (C1 ) et second (C2) canaux, tant que l'on n'a pas reçu de données et/ou d'acquittement(s) de données en provenance dudit équipement de réseau (MS-i) sur ledit second canal (C2).

3. Procédé selon l'une des revendications 1 et 2, **caractérisé en ce que** l'on répète ledit message sur ledit premier canal (C1) un nombre choisi de fois selon un schéma temporel choisi.

4. Procédé selon la revendication 3, **caractérisé en ce que** ledit nombre de répétitions est choisi en fonction d'un taux de réussite souhaité et/ou d'un taux d'erreurs mesuré.

5. Procédé selon l'une des revendications 3 et 4, **caractérisé en ce que** ledit schéma temporel est de type périodique.

6. Procédé selon la revendication 5, **caractérisé en ce que** la période de répétition des messages est choisie de manière à éviter une corrélation entre des taux d'erreurs associés à deux messages consécutifs.

7. Procédé selon l'une des revendications 1 à 6, **caractérisé en ce que** l'on détermine un délai permettant aux messages de changement de canal de parvenir audit équipement de réseau (MS-i) avec une avance au moins égale au temps nécessaire à l'équipement de réseau (MS-i) pour procéder audit changement de canal, puis on diffère la transmission des données sur lesdits premier (C1) et second (C2) canaux d'une valeur fonction dudit délai.

8. Procédé selon la revendication 7, **caractérisé en ce que** ledit délai est également fonction des débits de données et/ou des vitesses de transmission de données desdits premier (C1) et second (C2) canaux.

9. Procédé selon l'une des revendications 3 à 8, **caractérisé en ce que** l'on répète le message ledit nombre choisi de fois tant que l'on n'a pas reçu d'acquittement(s) de données en provenance dudit équipement de réseau (MS-i) sur ledit second canal (C2).

10. Procédé selon l'une des revendications 3 à 8, **caractérisé en ce que** l'on répète le message ledit nombre choisi de fois tout en observant ledit réseau, de manière à détecter un éventuel changement de comportement de l'équipement de réseau (MS-i) destinataire dudit message.

11. Procédé selon la revendication 10, **caractérisé en ce que** ladite détection de changement de comportement de l'équipement de réseau (MS-i) consiste en une réception de données en provenance dudit équipement de réseau (MS-i) sur ledit second canal (C2).

12. Procédé selon la revendication 10, **caractérisé en ce que** ladite détection de changement de comportement de l'équipement de réseau (MS-i) consiste en une détection d'une variation d'un paramètre choisi dans un groupe comprenant au moins un paramètre de changement de mode de fonctionnement, une fréquence, une position, et une réception d'accusé de réception.

13. Dispositif (D) de gestion de changement de canal entre un contrôleur de réseau (BSCn) et au moins un équipement de réseau (MS-i) dans un réseau de communications, **caractérisé en ce qu'**il comprend des moyens de gestion (M) agencés, en cas d'établissement d'une liaison sur un premier canal (C1 ) entre ledit contrôleur de réseau (BSCn) et ledit équipement de réseau (MS-i), en vue de transmettre et/ou recevoir des données, pour requérir dudit contrôleur de réseau (BSCn) i) qu'il adresse audit équipement de réseau (MS-i), sur ledit premier canal (C1), un message lui ordonnant de poursuivre ladite liaison sur un second canal (C2), tout en maintenant ledit premier canal (C1) jusqu'à ce qu'il reçoive sur ledit second canal (C2) des données et/ou des acquittement(s) de données provenant dudit équipement (MS-i), et ii) qu'il libère les ressources associées audit premier canal (C1) à réception desdites données et/ou desdits acquittement(s) de données.

14. Dispositif selon la revendication 13, **caractérisé en ce que**, dans le cas de données transmises à l'équipement (MS-i), lesdits moyens de gestion (M) sont agencés pour requérir dudit contrôleur de réseau (BSCn) qu'il poursuive la transmission des données audit équipement de réseau (MS-i) sur lesdits premier (C1) et second (C2) canaux, tant qu'il n'a pas reçu de données et/ou d'acquittement(s) de données en provenance dudit équipement de réseau (MS-i) sur ledit second canal (C2).

15. Dispositif selon l'une des revendications 13 et 14, **caractérisé en ce que** lesdits moyens de gestion (M) sont agencés pour répéter ledit message sur ledit premier canal (C1) un nombre choisi de fois selon un schéma temporel choisi.

16. Dispositif selon la revendication 15, **caractérisé en ce que** lesdits moyens de gestion (M) sont agencés pour choisir ledit nombre de répétitions en fonction d'un taux de réussite souhaité et/ou d'un taux d'erreurs mesuré.

17. Dispositif selon l'une des revendications 15 et 16, **caractérisé en ce que** ledit schéma temporel est de type périodique.

18. Dispositif selon la revendication 17, **caractérisé en ce que** lesdits moyens de gestion (M) sont agencés pour déterminer la période de répétition des messages de façon à éviter une corrélation entre des taux d'erreurs associés à deux messages consécutifs.

19. Dispositif selon l'une des revendications 13 à 18, **caractérisé en ce que** lesdits moyens de gestion (M) sont agencés pour déterminer un délai permettant aux messages de changement de canal de parvenir audit équipement de réseau (MS-i) avec une avance au moins égale au temps nécessaire à l'équipement de réseau (MS-i) pour procéder audit changement de canal, puis pour ordonner audit contrôleur de réseau (BSCn) de différer la transmission des données sur lesdits premier (C1) et second (C2) canaux d'une valeur fonction dudit délai.

20. Dispositif selon la revendication 19, **caractérisé en ce que** lesdits moyens de gestion (M) sont agencés pour déterminer ledit délai en fonction, également, des débits de données et/ou des vitesses de transmission de données desdits premier (C1) et second (C2) canaux.

21. Dispositif selon l'une des revendications 15 à 20, **caractérisé en ce que** lesdits moyens de gestion (M) sont agencés pour répéter le message ledit nombre choisi de fois tant qu'ils n'ont pas reçu d'acquittement(s) de données en provenance dudit équipement de réseau (MS-i) sur ledit second canal (C2).

22. Dispositif selon l'une des revendications 15 à 20, **caractérisé en ce que** lesdits moyens de gestion (M) sont agencés pour répéter le message ledit nombre choisi de fois et pour observer sensiblement simultanément ledit réseau, de manière à détecter un éventuel changement de comportement de l'équipement de réseau (MS-i) destinataire dudit message.

23. Dispositif selon la revendication 22, **caractérisé en ce que** lesdits moyens de gestion (M) sont agencés pour détecter un changement de comportement de l'équipement de réseau (MS-i) en cas de réception de données en provenance dudit équipement de réseau (MS-i) sur ledit second canal (C2).

24. Dispositif selon la revendication 22, **caractérisé en ce que** lesdits moyens de gestion (M) sont agencés pour détecter un changement de comportement de l'équipement de réseau (MS-i) en cas de variation d'un paramètre choisi dans un groupe comprenant comprenant au moins un paramètre de changement de mode de fonctionnement, une fréquence, une position, et une réception d'accusé de réception.

25. Contrôleur de réseau (BSCn) d'un réseau d'accès (RAN) de réseau de communications, **caractérisé en ce qu'**il comporte un dispositif (D) selon l'une des revendications 13 à 24.

26. Equipement d'un réseau d'accès (RAN) de réseau de communications comportant au moins un contrôleur de réseau (BSCn), **caractérisé en ce qu'**il comporte un dispositif (D) selon l'une des revendications 13 à 24.

27. Réseau de communications comportant un réseau d'accès (RAN) comprenant au moins un contrôleur de réseau (BSCn), **caractérisé en ce qu'**il comporte au moins un dispositif (D) selon l'une des revendications 13 à 24.

28. Utilisation du dispositif (D), du procédé, du contrôleur de réseau (BSCn) et de l'équipement de réseau d'accès (RAN) selon l'une des revendications 1 à 26 dans les réseaux cellulaires de communications.

29. Utilisation selon la revendication 28, dans les réseaux cellulaires de communications choisis dans un groupe comprenant les réseaux TDMA, CDMA, CDMA-One, PHS et FOMA.
